(19) **Europäisches Patentamt**
**European Patent Office**
**Office européen des brevets**

(11) **EP 4 174 558 B1**

(12) **EUROPEAN PATENT SPECIFICATION**

(45) Date of publication and mention
of the grant of the patent:
**06.11.2024 Bulletin 2024/45**

(21) Application number: **22165578.0**

(22) Date of filing: **30.03.2022**

(51) International Patent Classification (IPC):
***G02B 27/00*** (2006.01)

(52) Cooperative Patent Classification (CPC):
**G02B 27/0081; G02B 27/0172**

(54) **WAVEGUIDE DISPLAY DEVICE AND AUGMENTED REALITY DISPLAY APPARATUS**

WELLENLEITERANZEIGEVORRICHTUNG UND ANZEIGEVORRICHTUNG FÜR ERWEITERTE REALITÄT

DISPOSITIF D'AFFICHAGE À GUIDE D'ONDE ET APPAREIL D'AFFICHAGE DE RÉALITÉ AUGMENTÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.10.2021 CN 202111262989**

(43) Date of publication of application:
**03.05.2023 Bulletin 2023/18**

(73) Proprietor: **Beijing Xiaomi Mobile Software Co.,
Ltd.**
**Beijing 100085 (CN)**

(72) Inventor: **DUAN, Xinhui**
**Beijing, 100085 (CN)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(56) References cited:
**US-A1- 2016 231 478     US-A1- 2019 187 474
US-B1- 10 677 967**

## Description

### FIELD

The present invention relates to a field of augmented reality technology, and more particularly, to a waveguide display device and an augmented reality display apparatus.

### BACKGROUND

An augmented reality (AR) near-to-eye display technology is a wearable display system that enables a human eye to see an external real scene, and also to see a virtual scene generated by a computer through a certain optical system. In the augmented reality system, a computing component analyzes and processes the real scene observed by a user, and then generated virtual enhancement information is superimposed into the real scene through the near-to-eye display technology, so as to realize a seamless integration of the real scene and the virtual scene, thus assisting the user in recognizing the real world deeply and comprehensively. The AR apparatus has been applied in many fields, including military, navigation, education, medical treatment, industry and so on, and has broad applications in the field of electronic consumption. As one of the core technologies of the AR apparatus, the near-to-eye display technology has also become a research hotspot in industry and academia.

US 2019/187474 A1 discloses an eyepiece waveguide for an augmented reality display system, which includes an optically transmissive substrate, an input coupling grating region, a multi-directional pupil expander region, and an exit pupil expander region. The input coupling grating region receives an input beam of light and couples the input beam into the substrate as a guided beam. The multi-directional pupil expander region is positioned to receive the guided beam from the input coupling grating region and to diffract it in a plurality of directions to create a plurality of diffracted beams. The exit pupil expander region is positioned to receive one or more of the diffracted beams and to out couple them from the optically transmissive substrate as output beams.

US 2016/231478 A1 discloses an optical component, in which a combination of diffractive beam splitting and total internal reflection within the optical component results in multiple versions of each input beam being outwardly diffracted from an exit surface relief grating along both the width and the height of an exit zone as output beams in respective outward directions that substantially match the respective inward direction of the corresponding input beam.

US 10 677 967 B1 discloses a waveguide display, in which a flexible border for a liquid lens serves as a transition to allow movement at an edge of a membrane that is part of the liquid lens. The flexible border allows vertical translation of an end of a membrane portion.

## SUMMARY

The present invention provides a waveguide display device and an augmented reality display apparatus. The waveguide display device has a large range of an exit pupil, a small volume and a light weight, which is conducive to a miniaturization design of products. The technical solutions of the present invention are shown as follows.

The present invention is defined in the independent claim 1, and the preferable features according to the present invention are defined in the dependent claims. Any embodiment in the present disclosure that does not fall within the scope of the present invention should be regarded as an example for understanding the present invention.

Embodiments of a first aspect of the present invention provide a waveguide display device. The waveguide display device includes a waveguide substrate and a first optical element, a second optical element and a third optical element coupled to the waveguide substrate. The first optical element is located on a first side of the waveguide substrate. The first optical element is adjacent to a first surface of the waveguide substrate and configured to couple an incident light into the waveguide substrate, and the first surface of the waveguide substrate is a surface of the waveguide substrate facing away from a human eye. The waveguide substrate is configured to couple the light coupled-in by the first optical element to the second optical element. The second optical element and the third optical element are located on a second side of the waveguide substrate. The second optical element is adjacent to a second surface of the waveguide substrate and is configured to couple the light coupled to it by the waveguide substrate to the third optical element in a first direction and a second direction when viewed in a direction perpendicular to a plane where the third optical element is located. The second surface of the waveguide substrate is a surface of the waveguide substrate facing the human eye. The third optical element is adjacent to the first surface of the waveguide substrate and is configured to couple the light coupled to it by the second optical element to the second optical element in the first direction or the second direction when viewed in the direction perpendicular to the plane where the third optical element is located, and to couple the light coupled to it by the second optical element out to the human eye. The light coupled to the second optical element continues to propagate many times between the second optical element and the third optical element in the first direction or the second direction.

Optionally, the second optical element is configured to couple the light coupled to it by the waveguide substrate to the third optical element in the first direction by total reflection, and to couple the light coupled to it by the waveguide substrate to the third optical element in the second direction by diffraction.

Optionally, the third optical element is configured to couple the light coupled to it by the second optical element to the second optical element in the first direction or the second direction by total reflection, and to couple the light coupled to it by the second optical element out to the human eye by diffraction.

Optionally, the waveguide substrate is configured to couple the light coupled-in by the first optical element to the second optical element after the light coupled-in by the first optical element goes through at least one total reflection inside the waveguide substrate.

Optionally, the second optical element and the third optical element are opposite to each other, and an area of the second optical element and an area of the third optical element are equal.

Optionally, the third optical element is configured to couple the light coupled to it by the second optical element out to the human eye in the direction perpendicular to the plane where the third optical element is located.

Optionally, the first direction is perpendicular to the second direction.

Optionally, the second optical element and the third optical element are parallel to each other.

Optionally, the first optical element covers at least a part of the first surface of the waveguide substrate.

Optionally, the second optical element covers at least a part of the second surface of the waveguide substrate, the third optical element covers at least a part of the first surface of the waveguide substrate, and the second optical element is opposite to the third optical element.

Optionally, the first optical element is a one-dimensional grating, and the second optical element and the third optical element are two-dimensional gratings.

Optionally, the first optical element and the third optical element are on the first surface of the waveguide substrate and spaced apart from each other, and the second optical element is on the second surface of the waveguide substrate and opposite to the third optical element.

Embodiments of a second aspect of the present invention provide an augmented reality display apparatus. The augmented reality display apparatus includes a waveguide display device according to any one of the above embodiments and an optical machine configured to emit a light to the first optical element.

Optionally, the augmented reality display apparatus includes one of AR glasses, an AR head-mounted display apparatus and a head-up display apparatus.

The technical solutions according to the embodiments of the present invention bring at least the following beneficial effects.

In the embodiments of the present invention, the waveguide display device includes the waveguide substrate and the first optical element, the second optical element and the third optical element on the waveguide substrate. The first optical element is configured to couple the incident light into the waveguide substrate. The waveguide substrate is configured to couple the light coupled-in by the first optical element to the second optical element. The second optical element is configured to couple the light coupled to it by the waveguide substrate to the third optical element in the first direction and the second direction when viewed in the direction perpendicular to a plane where the third optical element is located. The third optical element is configured to couple the light coupled to it by the second optical element to the second optical element in the first direction or the second direction when viewed in the direction perpendicular to a plane where the third optical element is located, and to couple the light coupled to it by the second optical element out to the human eye. The second optical element and the third optical element are arranged at the first and second surfaces of the waveguide substrate, respectively. A relay optical element is omitted, thus reducing a volume and a weight of the waveguide display device. Moreover, the light coupled to the second optical element continues to propagate many times between the second optical element and the third optical element along the first direction or the second direction, so as to realize a two-dimensional mydriasis.

It should be understood that the above general description and the following detailed description are only exemplary and explanatory and do not limit the present invention.

## BRIEF DESCRIPTION OF THE DRAWINGS

Accompanying drawings herein are incorporated into the specification and constitute a part of the specification. The accompanying drawings show embodiments consistent with the present invention, and together with the specification are used to explain the principle of the present invention. However, they do not constitute an improper limitation to the present invention.

Fig. 1 is a schematic view of various geometric parameters in a formation stage of a two-dimensional confined volume grating according to an embodiment of the present invention.

Fig. 2 is a schematic view of various geometric parameters in a readout stage of a two-dimensional confined volume grating according to an embodiment of the present invention.

Fig. 3 is a schematic view of a waveguide display device according to an embodiment of the present invention.

Fig. 4 is a scene view of a waveguide display device according to an embodiment of the present invention.

Fig. 5 is an exploded view of a waveguide display device according to an embodiment of the present invention.

Fig. 6 is a schematic view of light propagation of a waveguide display device according to an embodiment of the present invention.

Fig. 7 is a schematic view of light propagation in a X-axis direction and a Z-axis direction according to an embodiment of the present invention.

Fig. 8 is a schematic view of light propagation in a Y-axis direction and a Z-axis direction according to an embodiment of the present invention.

Fig. 9 is a schematic view of AR glasses according to an embodiment of the present invention.

Fig. 10 is a scene view of a head-up display apparatus according to an embodiment of the present invention.

## DETAILED DESCRIPTION

In order to enable those ordinary skilled in the art to better understand the technical solutions of the present invention, the technical solutions in embodiments of the present invention will be clearly and completely described below in combination with the accompanying drawings.

It should be noted that the terms "first," "second" and the like in the descriptions, claims and the above accompanying drawings of the present invention are used to distinguish similar objects, and not necessary be used to describe a specific sequence or order. It should be understood that the terms used in this manner can be interchanged where appropriately so that the embodiments of the present invention described herein can be implemented in an order other than those illustrated or described herein. The implementations described in the following embodiments do not represent all possible implementations consistent with the present invention. On the contrary, they are only examples of devices and methods consistent with some aspects of the present invention as detailed in the appended claims.

A core task of AR near-to-eye display technology is for virtual and real superimposition, that is, to allow a light of the real world and a light of a virtual image to pass through and reach the human eye simultaneously. The near-to-eye display technology includes a geometrical optics superimposer technology and the near-to-eye display technology is based on diffractive optics.

At present, the near-to-eye display technology based on diffractive optics has a small range of an exit pupil, a volume of the apparatus is large, and a weight of the apparatus is relatively large.

Specifically a waveguide display device of the near-to-eye display technology based on diffractive optics includes: an in-coupling diffractive element, a relay diffractive element and an out-coupling diffractive element. The relay diffractive element is located above the out-coupling diffractive element. A remaining space of the out-coupling diffractive element is small, and a range of an exit pupil is small. A space occupied by the relay diffractive element is large. A volume and a weight of the waveguide display device are relatively large, which is not conducive to the miniaturization design of the waveguide display device.

The basic principle of the near-to-eye display technology is described below.

There are two kinds of the near-to-eye display technology based on diffractive optics, namely a waveguide device based on a surface relief grating and a waveguide device based on a volume holographic grating. The embodiments of the present invention mainly describe the waveguide device of the volume holographic grating.

The mathematical expression of the coupled wave theory includes coupling differential equations derived from the wave equation, whose main principle is that individual light waves continuously exchange energy in the process of propagation inside the hologram. Kogelnik coupled wave theory is widely used to analyze diffraction characteristics of various volume gratings and give a quantitative result. Since the Kogelnik theory implies the assumption that a wavefront size of a light participating in diffraction is infinite, only a change of the light during propagation along a thickness direction of the grating is studied under this assumption. Thus, the Kogelnik theory is essentially a one-dimensional theory. A two-dimensional theory assumes that properties of a material and properties of the light wave are all unchanged in a direction along a grating fringe plane. Usually, this direction is designated as a direction of an electric vector of the light wave. A size of the grating is limited in two directions perpendicular to the grating fringe plane, so that the light waves couple with each other and change uniformly in the two directions.

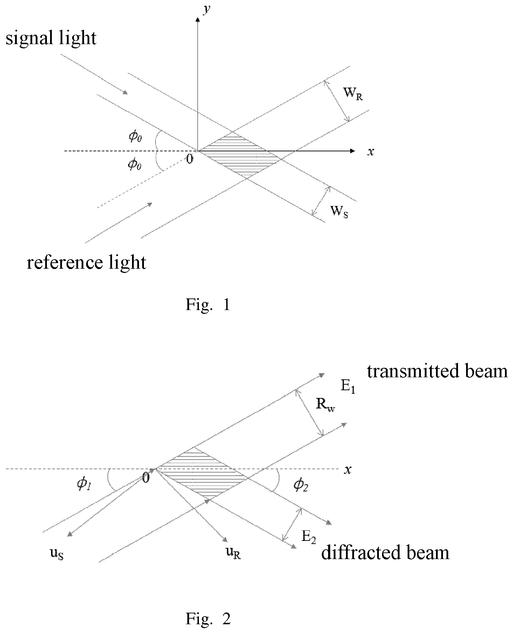

Fig. 1 is a schematic view of various geometric parameters in a formation stage of a two-dimensional confined volume grating. Fig. 2 is a schematic view of various geometric parameters in a readout stage of a two-dimensional confined volume grating. A reference light with a width of WR and a signal light with a width of WS are incident into a medium and interfere with each other inside the medium to form a volume grating. A coordinate system is selected so that the reference light and the signal light are incident at an angle $\phi 0$ and an angle $-\phi 0$ relative to an X axis, respectively. The formed grating is denoted as a periodic change of a dielectric constant $\varepsilon_r$ of the medium:

$$\varepsilon_r = \varepsilon_{r0} + \varepsilon_{r1} a_{10} a_{20} \cos\left[\beta_0 \left(p_{10} - p_{20}\right)\right].$$

In the equation, $\varepsilon_{r0}$ is an average dielectric constant, and $\varepsilon_{r1}$ is an amplitude of a change of the dielectric constant. $\varepsilon_{r0}$ and $\varepsilon_{r1}$ can be a complex value, an imaginary part of which represents a change of an average absorptivity and a modulation amplitude of the absorption grating, respectively. $p_{i0}$ is a wavefront phase function of a plane light wave, and is denoted in the X-Y coordinate system as $p_{i0} = x \cos \phi_0 - (-1)^i y \sin \phi_0$, in which i (i = 1, 2) represents the reference light and the signal light, respectively. $a_{10}$ and $a_{20}$ represents normalized complex

amplitude distributions on wave fronts of two writing light waves respectively, and $\beta_0$ is a propagation constant of the writing light wave.

For the two-dimensional grating, the category of the Bragg diffraction is considered, and a grating vector k is denoted as:

$$K = \delta \mathrm{W} s(u_R + u_S) .$$

A Bragg mismatch parameter $\delta$ in the grating vector k is denoted as:

$$\delta = \frac{1}{2}\beta\Delta\phi \sec^2\phi_0 + \Delta\beta \tan\phi_0 .$$

In the equation, $\beta = 2\pi/\lambda$ is a propagation constant of a readout light wave, $\lambda$ is a wavelength of the readout light wave, and $\Delta\phi$ and $\Delta\beta$ represent deviations of an angle and a wavelength of the readout light wave from the Bragg condition, respectively.

When discussing the diffraction characteristics of fully overlapped uniform grating (A* is constant), for a two-dimensional finite-size volume grating, a grating diffraction efficiency is defined as:

$$\eta = \frac{\int_{\frac{-1}{R_w}}^{0}\left|E_2(R_w, u_S)\right|^2 \mathrm{d}u_S}{\int_{0}^{R_w}\left|E_1(u_R, 0)\right|^2 \mathrm{d}u_R} .$$

In view of the above existing technical problems, in some embodiments of the present invention, a waveguide display device includes: a waveguide substrate and a first optical element, a second optical element and a third optical element arranged coupled to the waveguide substrate. The first optical element is configured to couple an incident light into the waveguide substrate. The waveguide substrate is configured to couple the light coupled-in by the first optical element to the second optical element. The second optical element is configured to couple the light coupled to it by the waveguide substrate to the third optical element in a first direction and a second direction. The third optical element is configured to couple the light coupled to it by the second optical element to the second optical element in the first direction or the second direction, and to couple the light coupled to it by the second optical element out to a human eye. The second optical element and the third optical element are arranged at a first surface and a second surface of the waveguide substrate, respectively, and a relay optical element is omitted, so that the second optical element and the third optical element provide a large design space, thus reducing a volume and a weight of the waveguide display device. Moreover, the light coupled to the second optical element continues to propagate many times between the second optical element and the third optical element in the first direction or the second direction, so as to realize a two-dimensional mydriasis.

In this embodiment, an augmented reality display apparatus includes but is not limited to AR glasses, an AR head-mounted display apparatus and a head-up display apparatus. When the augmented reality display apparatus includes the AR glasses, the type of the AR glasses is not limited, which can be monocular AR glasses or binocular AR glasses.

In an embodiment, when the augmented reality display apparatus includes the AR glasses, the AR glasses include a frame, a waveguide display device and an optical machine. The waveguide display device and the optical machine are arranged on the frame. The waveguide display device serves as a lens of the AR glasses, and the optical machine sends an image light to the waveguide display device. The optical machine is not limited in the present invention, as long as it can emit a light to the waveguide display device. That is, any light emitter known in the related art may be used herein. The waveguide display device will be described in detail in subsequent embodiments, and will not be repeated in this embodiment.

In another embodiment, when the augmented reality display apparatus is the head-up display apparatus, the head-up display apparatus includes a body, a waveguide display device and an optical machine. The body and the optical machine are arranged on the body. The optical machine is not limited in the present invention, as long as it can emit a light to the waveguide display device. That is, any light emitter known in the related art may be used herein. The waveguide display device will be described in detail in subsequent embodiments, and will not be repeated in this embodiment.

In the above embodiments, the optical machine provides a collimated image source by projection.

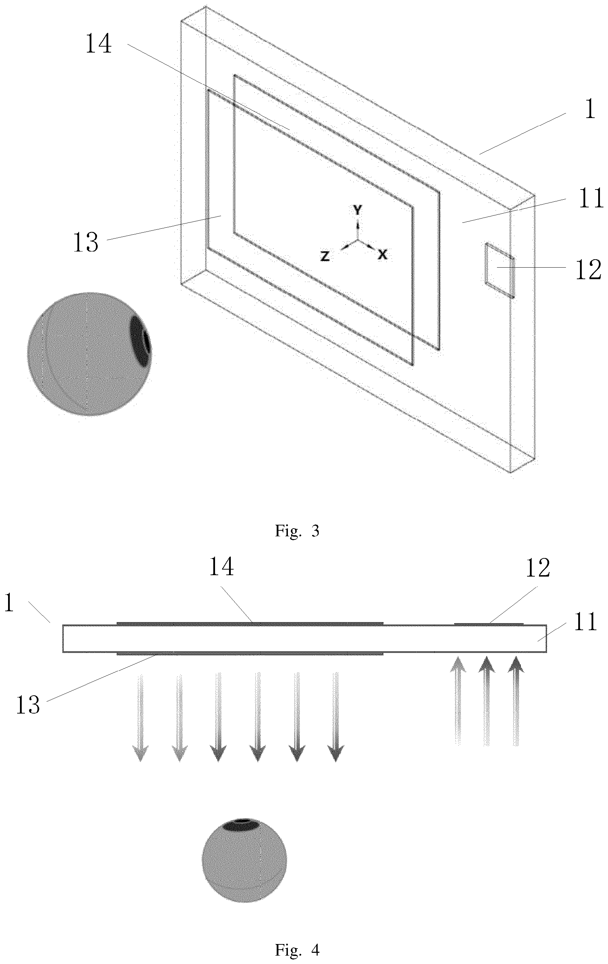

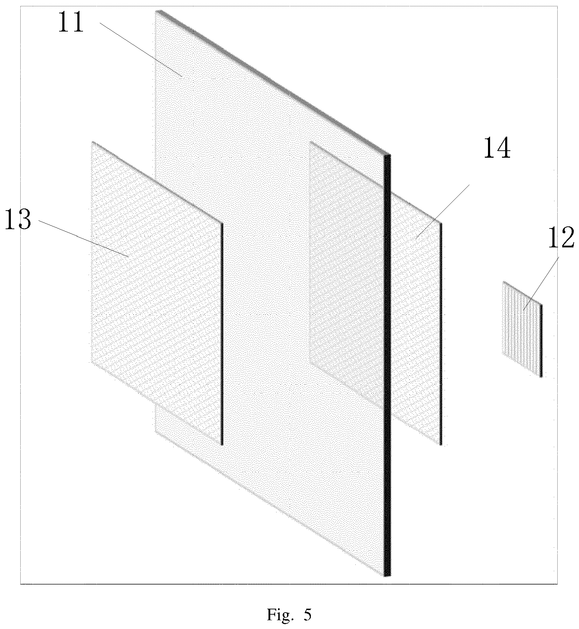

Fig. 3 is a schematic view of a waveguide display device 1 according to an embodiment of the present invention. Fig. 5 is an exploded view of a waveguide display device according to an embodiment of the present invention. As shown in Fig. 3 and Fig. 5, a waveguide display device 1 includes a waveguide substrate 11 and a first optical element 12, a second optical element 13 and a third optical element 14 arranged coupled to the waveguide substrate 11. As used herein the first and second sides of waveguide substrate 11 are relative to the X axis of Fig. 3. The first and second surfaces of waveguide substrate 11 are relative to the Z axis of Fig. 3. The first optical element 12 is located on a first side of the waveguide substrate 11. For example, the first optical element 12 is located at a right part of the waveguide substrate 11 in Fig. 3 and Fig. 5. The first optical element 12 is arranged adjacent to a first surface of the waveguide substrate 11 and configured to couple an incident light into the waveguide substrate 11. The first surface of the waveguide substrate 11 is a side surface of the waveguide substrate 11 facing away from the human eye. The waveguide substrate 11 is configured to couple the light coupled-in by the first optical element 12 to the second optical element 13. The second optical element 13 and the third optical element 14 are located on a second side of the waveguide substrate 11. For example, the second optical element 13 and the third optical element 14 are located at a left part of the waveguide substrate 11 in Fig. 3 and Fig. 5. The second optical element 13 is arranged adjacent to a second surface of the waveguide substrate 11 and is configured to couple the light coupled to it by the waveguide substrate 11 to the third optical element 14 in a first direction and a second direction when viewed in a direction perpendicular to a plane where the third optical element 14 is located. The second surface of the waveguide substrate 11 is a side surface of the waveguide substrate 11 facing the human eye. The first direction and the second direction are directions defined in the plane where the third optical element 14 is located. That is, the first direction and the second direction have no component in the direction perpendicular to the plane where the third optical element 14 is located. The third optical element 14 is arranged adjacent to the first surface of the waveguide substrate 11 and configured to couple the light coupled to it by the second optical element 13 to the second optical element 13 in the first direction or the second direction when viewed in a direction perpendicular to the plane where the third optical element 14 is located, and to couple the light coupled to it by the second optical element 13 out to the human eye. Moreover, the light coupled to the second optical element 13 continues to propagate many times between the second optical element 13 and the third optical element 14 in the first direction or the second direction.

In some embodiments, the first optical element 12 and the third optical element 14 are on the first surface of the waveguide substrate 11 and spaced apart from each other, and the second optical element 13 is on the second surface of the waveguide substrate 11 and opposite to the third optical element 14.

The waveguide display device according to the embodiments of the present invention includes the waveguide substrate and the first optical element, the second optical element and the third optical element coupled to the waveguide substrate. The first optical element is configured to couple the incident light into the waveguide substrate. The waveguide substrate is configured to couple the light coupled-in by the first optical element to the second optical element. The second optical element is configured to couple the light coupled to it by the waveguide substrate to the third optical element in the first direction and the second direction. The third optical element is configured to couple the light coupled to it by the second optical element to the second optical element in the first direction or the second direction, and to couple the light coupled to it by the second optical element out to the human eye. The second optical element and the third optical element are arranged at the first surface and the second surface of the waveguide substrate, respectively, and a relay optical element is omitted, so that a volume and a weight of the waveguide display device are reduced. Moreover, the light coupled to the second optical element continues to propagate many times between the second optical element and the third optical element in the first direction or the second direction, so as to realize a two-dimensional mydriasis.

Fig. 4 is a scene view of a waveguide display device 1 according to an embodiment of the present invention. As shown in Fig. 3 and Fig. 4, the light is incident on a surface of the first optical element 12, and the first optical element 12 forwards the incident light to go through action of the waveguide substrate 11, the second optical element 13 and the third optical element 14, so as to realize the two-dimensional mydriasis in a X-axis direction and a Y-axis direction shown in Fig. 3. Then, the light is incident on the human eye, and a virtual field of view is formed in front of the human eye.

It should be noted that, in Fig. 3, a X axis of a coordinate system is parallel to a length direction of the waveguide display device 1 or a horizontal axis of the virtual field of view, a Y axis of the coordinate system is parallel to a width direction of the waveguide display device 1, and a Z axis of the coordinate system is perpendicular to the waveguide display device or parallel to a thickness direction of the waveguide display device 1.

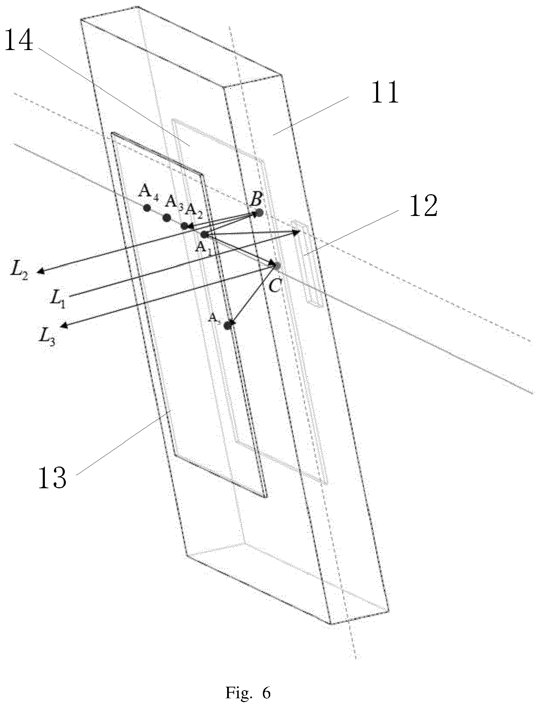

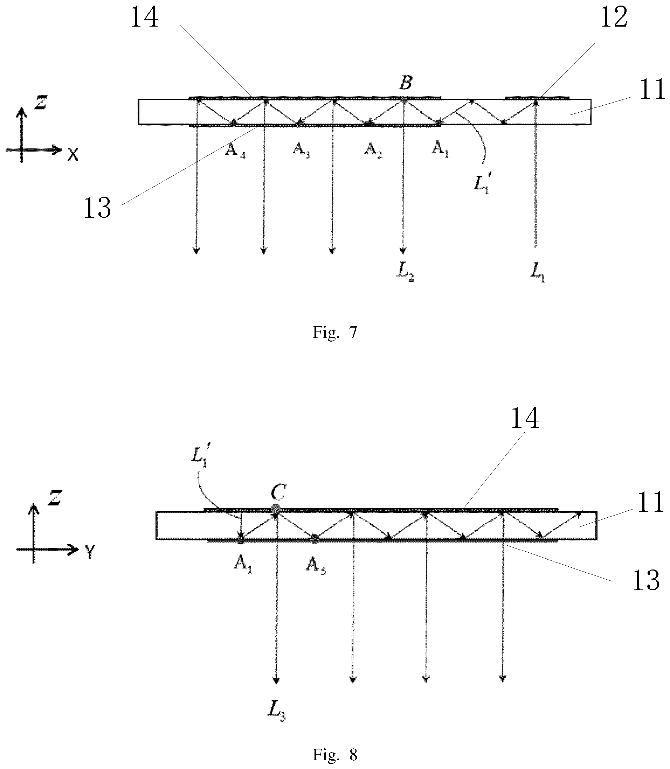

Fig. 6 is a schematic view of light propagation of a waveguide display device 1 according to an embodiment of the present invention. Fig. 7 is a schematic view of light propagation in a X-axis direction and a Z-axis direction according to an embodiment of the present invention. Fig. 8 is a schematic view of light propagation in a Y-axis direction and a Z-axis direction according to an embodiment of the present invention.

It should be noted that, for an illustrative purpose, embodiments of Fig. 6 and Fig. 7 take any one (a light L1) of lights emitted by the optical machine as an example. A light $L_1'$ in Fig. 7 and Fig. 8 is the light incident on the second optical element 13 from the waveguide substrate 11. The following embodiments are described with reference to any light L1.

In the above embodiments, as shown in Figs. 4 to 8, the light L1 emitted by the optical machine is incident on the first optical element 12 and is diffracted into the waveguide substrate 11 by the first optical element 12. The waveguide substrate 11 is configured to couple the light coupled-in by the first optical element 12 to the second optical element 13. A method in which the waveguide substrate 11 couples the light coupled-in by the first optical element 12 to the second optical element 13, includes but is not limited to following light processing methods.

First Light processing method: the waveguide substrate 11 is configured to directly couple the light coupled-in by the first optical element 12 to the second optical element 13. In this light processing method, a relative position of the first optical element 12 and the second optical element 13 may be adjusted, so as to directly couple the light coupled-in by the first optical element 12 to the second optical element 13 through the waveguide substrate 11.

Second light processing method: the waveguide substrate 11 is configured to couple the light coupled-in by the first optical element 12 to the second optical element 13 after the light coupled-in by the first optical element 12 goes through at least one total reflection inside the waveguide substrate 11. As shown in Fig. 7, the light coupled-in by the first optical element 12 meets a condition of the total reflection in the waveguide substrate 11, and the light coupled-in by the first optical element 12 forms the light $L_1'$ after the total reflection and the light $L_1'$ is incident on the second optical element 13.

In some embodiments, the first direction is perpendicular to the second direction. In some embodiments, the first direction is parallel to the X axis of the coordinate system, and the second direction is parallel to the Y axis of the coordinate system. It should be noted that the first direction and the second direction may not be parallel to the X axis of the coordinate system or the Y axis of the coordinate system. In this case, an inclined virtual field of view is formed in front of the human eye.

In some embodiments, the first optical element 12, the second optical element 13 and the third optical element 14 are nanostructures to diffract the incident light.

In the above embodiments, the second optical element 13 is configured to couple the light coupled to it by the waveguide substrate 11 to the third optical element 14 by total reflection in the first direction, and to couple the light coupled to it by the waveguide substrate 11 to the third optical element 14 by diffraction in the second direction. As shown in Fig. 6, Fig. 7 and Fig. 8, the light coupled-in by the first optical element 12 forms the light $L_1'$ after the total reflection and the light $L_1'$ is incident on the second optical element 13 at a point A1. The light $L_1'$ meets the condition of the total reflection at the point A1. The second optical element 13 reflects the light $L_1'$ at the point A1 to a point B of the third optical element 14 along the X-axis direction of the coordinate system by total reflection, and the light reflected by the second optical element 13 at the point A1 is a zero order light. The second optical element 13 couples the light $L_1'$ at the point A1 out to a point C of the third optical element 14 along the Y-axis direction of the coordinate system by diffraction, and the light generated by the second optical element 13 at the point A1 by the diffraction is a diffraction order light.

In the above embodiments, the third optical element 14 is configured to couple the light coupled to it by the second optical element 13 to the second optical element 13 in the first direction or the second direction by total reflection, and to couple the light coupled to it by the second optical element 13 out to the human eye by diffraction. The third optical element 14 is configured to couple the light coupled to it by the second optical element 13 out to the human eye in the direction perpendicular to the plane where the third optical element 14 is located. As shown in Fig. 6, Fig. 7 and Fig. 8, the light coupled by the second optical element 13 meets the condition of the total reflection at the point B, the third optical element 14 is configured to reflect the light coupled to it by the second optical element 13 at the point B to a point A2 of the second optical element 13 along the X-axis direction of the coordinate system by total reflection, and also, the third optical element 14 is configured to couple the light coupled to it by the second optical element 13 at the point B out to the human eye by diffraction. The light coupled by the second optical element 13 meets the condition of the total reflection at the point C, the third optical element 14 is configured to reflect the light coupled to it by the second optical element 13 at the point C to a point A5 of the second optical element 13 along the Y-axis direction of the coordinate system by total reflection, and also, the third optical element 14 is configured to couple the light coupled to it by the second optical element 13 at the point C out to the human eye by diffraction.

It may be understood that, for convenient and easy understanding of the present invention, a travel path of the light is mainly described in the plane where the third optical element 14 is located, i.e. a projection of the travel path of the light on the plane where the third optical element 14 is located is mainly described.

However, in the above embodiments, the light coupled to the second optical element 13 from the third optical element 14 continues to propagate many times between the second optical element 13 and the third optical element 14 in the first direction or the second direction, that is, the light actually has a displacement in the direction (i.e. the Z-axis direction) perpendicular to the plane where the third optical element 14 is located. As shown in Fig. 7, the light coupled to the second optical element 13 from the third optical element 14 continues to propagate many times between the second optical element 13 and the three optical elements 14 along the X-axis direction and the Z-axis direction of the coordinate system, and as shown in Fig. 8, the light coupled to the second optical element 13 from the third optical element 14 continues to propagate many times between the second optical element 13 and the three optical elements 14 along the Y-axis direction and the Z-axis direction of the coordinate system, so as to realize the two-dimensional mydriasis.

It should be noted that, as shown in Fig. 6, the zero order light and the diffraction order light are subject to exactly identical modulation at the point A1, the point A2, a point A3, a point A4 and the point A5 in the drawings. A light intensity may be adjusted according to requirements of a brightness uniformity of an actual field of view. In the actual processing, a photomask may be arranged to control a grating efficiency.

In some embodiments, the second optical element 13 and the third optical element 14 are opposite to each other, and an area of the second optical element 13 and an area of the third optical element 14 are equal. The second optical element 13 and the third optical element 14 are opposite to each other, so that a relay optical element does not need to be arranged, so as to reserve a design space for the second optical element 13 and the third optical element 14. In this way, the second optical element 13 and the third optical element 14 may adopt a larger area, thus improving a range of the mydriasis, reasonably setting a position of an exit pupil area and ensuring a reasonable observation range. The area of the second optical element 13 and the area of the third optical element 14 are equal, so that the second optical element 13 and the third optical element 14 may be processed simultaneously, thus improving the production efficiency of the elements.

In some embodiments, the first optical element 12, the second optical element 13 and the third optical element 14 are arranged adjacent to the surfaces of the waveguide substrate 11. As shown in Figs. 3 to 8, the first optical element 12 covers at least a part of the first surface of the waveguide substrate 11, the second optical element 13 covers at least a part of the second surface of the waveguide substrate 11, and the third optical element 14 covers at least another part of the first surface of the waveguide substrate 11. In the embodiments of the present invention, the first optical element 12, the second optical element 13 and the third optical element 14 may be adjusted according to the actual situation. For example, the first optical element 12, the second optical element 13 and the third optical element 14 may be embedded inside the waveguide substrate 11 in a totally enclosed form. In some embodiments, the surface of the waveguide substrate 11 is provided with a groove, and the first optical element 12, the second optical element 13 and the third optical element 14 are mounted in the groove in the surface of the waveguide substrate 11 in a semi-enclosed form.

In some embodiments, the second optical element 13 and the third optical element 14 are parallel to each other. The second optical element 13 and the third optical element 14 may adopt same grating structure parameters, so as to symmetrically modulate the light.

In some embodiments, the first optical element 12 is a one-dimensional grating. The one-dimensional grating includes but is not limited to any one of the following gratings: an inclined grating, a rectangular grating, a blazed grating and a volume grating. The second optical element 13 and the third optical element 14 are the two-dimensional gratings. The first optical element 12 is a holographic one-dimensional grating, and the second optical element 13 and the third optical element 14 are holographic two-dimensional gratings. The second optical element 13 and the third optical element 14 in the present invention adopt the holographic two-dimensional grating, so that the efficiency of the diffraction waveguide can be greatly improved.

The technical solution of the embodiments of the present invention is described in detail below in combination with Figs. 6 to 8.

As shown in Fig. 4, the light coupled-in by the first optical element 12 meets the condition of the total reflection in the waveguide substrate 11, the light coupled-in by the first optical element 12 forms the light $L'_1$ after the total reflection and the light $L'_1$ is incident on the second optical element 13.

As shown in Fig. 6 and Fig. 7, the light coupled-in by the first optical element 12 forms the light $L'_1$ after the total reflection and the light is incident on the point A1 of the second optical element 13. The light $L'_1$ meets the condition of total reflection at the point A1. The second optical element 13 reflects the light $L'_1$ at the point A1 to the point B of the third optical element 14 along the X-axis direction of the coordinate system by total reflection, and the light reflected by the second optical element 13 at the point A1 is the zero order light. The second optical element 13 couples the light $L'_1$ at the point A1 to the point C of the third optical element 14 along the Y-axis direction of the coordinate system by diffraction, and the light generated by the second optical element 13 at the point A1 by diffraction is the diffraction order light.

As shown in Fig. 6 and Fig. 8, the light coupled by the second optical element 13 meets the condition of total reflection at the point B, the third optical element 14 is configured to reflect the light coupled to it by the second optical element 13 at the point B to the point A2 of the second optical element 13 along the X-axis direction of the coordinate system by total reflection, and also, the third optical element 14 is configured to couple the light coupled to it by the second optical element 13 at the point B out to the human eye. The light coupled by the second optical element 13 meets the condition of total reflection at the point C, the third optical element 14 is configured to reflect the light coupled to it by the second optical element 13 at the point C to the point A5 of the second optical element 13 along the Y-axis direction of the coordinate system by total reflection, and also, the third optical element 14 is configured to couple the light coupled to it by the second optical element 13 at the point C out to the human eye by diffraction.

As shown in Fig. 7, the light coupled to the second optical element 13 from the third optical element 14 continues to propagate many times between the second optical element 13 and the three optical element 14 along the X-axis direction and Z-axis direction of the coordinate system, and as shown in Fig. 8, the light coupled to the second optical element 13 from the third optical element 14 continues to propagate many times between the second optical element 13 and the three optical elements 14 along the Y-axis direction and the Z-axis direction of the coordinate system, so as to realize the two-dimensional mydriasis.

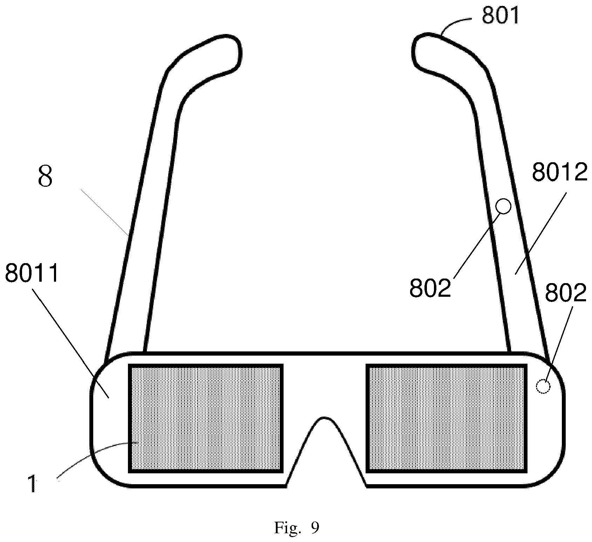

Fig. 9 is a schematic view of AR glasses according to an embodiment of the present invention. Taking a scene of the AR glasses as an example, the technical solution of the present invention is described in combination with Figs. 3 to 8.

As shown in Fig. 9, the AR glasses 8 include a frame 801, the waveguide display device 1 according to any one of the above embodiments and an optical machine 802, and the waveguide display device 1 and the optical machine 802 are arranged on the frame 801. The frame 801 includes an eyeglass frame 8011 and lens legs 8012 connected to two sides of the eyeglass frame 8011. The optical machine 802 may be arranged on the eyeglass frame 8011 or on the lens leg 8012 on either side.

In the waveguide display device 1 according to the embodiments of the present invention, the second optical element 13 and the third optical element 14 are arranged at the first surface and the second surface of the waveguide substrate 11, respectively. The relay optical element is omitted, so that a large design space is provided for the second optical element 13 and the third optical element 14, a range of the mydriasis of the waveguide display device 1 is increased, and an observable range for the human eye to watch a virtual image in a real scene through the AR glasses is increased. The virtual image in the real scene can be watched through the AR glasses no matter the AR glasses are offset upwards, downwards, leftwards or rightwards relative to human eye, thus improving the user experience. The AR glasses may be adapted to users having different habits of wearing AR glasses.

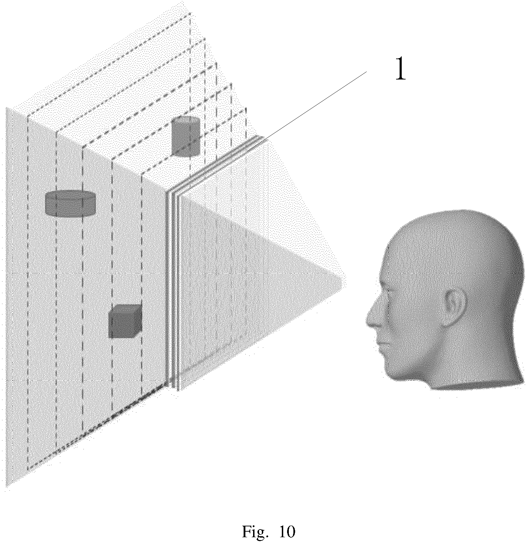

Fig. 10 is a scene view of a head-up display apparatus according to an embodiment of the present invention. Taking the scene of the head-up display apparatus as an example, the technical solution of the present invention is described in combination with Figs. 3 to 8.

The augmented reality display apparatus is arranged on a front windshield of a vehicle. The augmented reality display apparatus includes the waveguide display device 1 according to any one of the above embodiments and an optical machine. Part of the front glass of the vehicle may be configured as the waveguide substrate 11 of the augmented reality display apparatus. The first optical element 12, the second optical element 13 and the third optical element 14 may be arranged on a surface of the part of the glass.

In the waveguide display device 1 according to the embodiments of the present invention, the second optical element 13 and the third optical element 14 are arranged at the first surface and the second surface of the waveguide substrate 11, respectively. The relay optical element is omitted, so that a large design space is provided for the second optical element 13 and the third optical element 14, a range of the mydriasis of the waveguide display device 1 is increased, and an observable range for the human eye to watch a virtual image in a real scene through the head-up display apparatus is increased. Moreover, the observable range for the human eye to watch the virtual image in the real scene through the head-up display apparatus may be adjusted by reasonably setting positions and sizes of the second optical element 13 and the third optical element 14.

It should be noted that relational terms herein such as "first" and "second" are only used to distinguish an entity or operation from another entity or operation, and do not necessarily require or imply that any such actual relationship or order exists between these entities or operations. Moreover, terms "comprise," "include" or any other variations are intended to cover non-exclusive inclusion, so that a process, a method, an article or an apparatus including a series of elements includes not only those elements, but also other elements not explicitly listed, or also includes elements inherent for such process, method, article or apparatus. Without further restrictions, an element defined by the statement "including a......" does not exclude the existence of other identical elements in the process, method, article or apparatus including this element.

**Claims**

1. A waveguide display device (1), comprising a waveguide substrate (11) and a first optical element (12), a second optical element (13) and a third optical element (14) coupled to the waveguide substrate (11), wherein

    the first optical element (12) is located on a first side of the waveguide substrate (11), the first optical element (12) is adjacent to a first surface of the waveguide substrate (11) and configured to couple an incident light into the waveguide substrate (11), and the first surface of the waveguide substrate (11) is a surface of the waveguide substrate (11) facing away from a human eye;
    the waveguide substrate (11) is configured to couple the light coupled-in by the first optical element (12) to the second optical element (13); the second optical element (13) and the third optical element (14) are located on a second side of the waveguide substrate (11); and the third optical element (14) is configured to couple the light coupled to it by the second optical element (13) to the second optical element (13) in the first direction or the second direction when viewed in the direction perpendicular to the plane where the third optical element (14) is located, and to couple the light coupled to it by the second optical element (13) out to the human eye, and the light coupled to the second optical element (13) continues to propagate many times between the second optical element (13) and the third optical element (14) in the first direction or the second direction,
**characterized in that**,
the second optical element (13) is adjacent to a second surface of the waveguide substrate (11), the second optical element (13) is configured to couple the light coupled to it by the waveguide substrate (11) to the third optical element (14) in a first direction and a second direction when viewed in a direction perpendicular to a plane where the third optical element (14) is located, and the second surface of the waveguide substrate (11) is a surface of the waveguide substrate (11) facing the human eye,
the third optical element (14) is arranged adjacent to the first surface of the waveguide substrate (11).

**2.** The waveguide display device (1) according to claim 1, wherein the second optical element (13) is configured to couple the light coupled to it by the waveguide substrate (11) to the third optical element (14) in the first direction by total reflection, and to couple the light coupled to it by the waveguide substrate (11) out to the third optical element (14) in the second direction by diffraction.

**3.** The waveguide display device (1) according to claim 1 or 2, wherein the third optical element (14) is configured to couple the light coupled to it by the second optical element (13) to the second optical element (13) in the first direction or the second direction by total reflection, and to couple the light coupled to it by the second optical element (13) out to the human eye by diffraction.

**4.** The waveguide display device (1) according to any one of claims 1 to 3, wherein the waveguide substrate (11) is configured to couple the light coupled-in by the first optical element (12) to the second optical element (13) after the light coupled-in by the first optical element (12) goes through at least one total reflection inside the waveguide substrate (11).

**5.** The waveguide display device (1) according to any one of claims 1 to 4, wherein the second optical element (13) and the third optical element (14) are opposite to each other, and an area of the second optical element (13) and an area of the third optical element (14) are equal.

**6.** The waveguide display device (1) according to any one of claims 1 to 5, wherein the third optical element (14) is configured to couple the light coupled to it by the second optical element (13) out to the human eye in the direction perpendicular to the plane where the third optical element (14) is located.

**7.** The waveguide display device (1) according to any one of claims 1 to 6, wherein the first direction is perpendicular to the second direction.

**8.** The waveguide display device (1) according to any one of claims 1 to 7, wherein the second optical element (13) and the third optical element (14) are parallel to each other.

**9.** The waveguide display device (1) according to any one of claims 1 to 8, wherein the first optical element (12) covers at least a part of the first surface of the waveguide substrate (11).

**10.** The waveguide display device (1) according to any one of claims 1 to 9, wherein the second optical element (13) covers at least a part of the second surface of the waveguide substrate (11), the third optical element (14) covers at least a part of the first surface of the waveguide substrate (11), and the second optical element (13) is opposite to the third optical element (14).

**11.** The waveguide display device (1) according to any one of claims 1 to 10, wherein the first optical element (12) is a one-dimensional grating, and the second optical element (13) and the third optical element (14) are two-dimensional gratings.

**12.** The waveguide display device (1) according to any one of claims 1 to 11, wherein the first optical element (12) and the third optical element (14) are on the first surface of the waveguide substrate (11) and spaced apart from each other, and the second optical element (13) is on the second surface of the waveguide substrate (11) and opposite to the third optical element (14).

**13.** An augmented reality display apparatus, comprising:

a waveguide display device (1) according to any one of claims 1 to 12; and
an optical machine configured to emit a light to the first optical element (12).

**14.** The augmented reality display apparatus according to claim 13, wherein the augmented reality display apparatus comprises one of AR glasses, an AR head-mounted display apparatus and a head-up display apparatus.

**Patentansprüche**

**1.** Eine Wellenleiteranzeigevorrichtung (1), die ein Wellenleitersubstrat (11) und ein erstes optisches Element (12), ein zweites optisches Element (13) und ein drittes optisches Element (14) aufweist, die mit dem Wellenleitersubstrat (11) gekoppelt sind, wobei

das erste optische Element (12) sich auf einer ersten Seite des Wellenleitersubstrats (11) befindet, das erste optische Element (12) benachbart zu einer ersten Oberfläche des Wellenleitersubstrats (11) ist und dazu konfiguriert ist, ein einfallendes Licht in das Wellenleitersubstrat (11) zu koppeln, und die erste Oberfläche des Wellenleitersubstrats (11) eine Oberfläche des Wellenleitersubstrats (11) ist, die von einem menschlichen Auge abgewandt ist;
das Wellenleitersubstrat (11) dazu konfiguriert ist, das Licht, das durch das erste optische Element (12) eingekoppelt wird, mit dem zweiten optischen Element (13) zu koppeln;
das zweite optische Element (13) und das dritte optische Element (14) sich auf einer zweiten Seite des Wellenleitersubstrats (11) befinden; und
das dritte optische Element (14) dazu konfiguriert ist, das Licht, das durch das zweite optische Element (13) mit demselben gekoppelt wird, mit dem zweiten optischen Element (13) in der ersten Richtung oder der zweiten Richtung zu koppeln, in der Richtung senkrecht zu der Ebene gesehen, wo sich das dritte optische Element (14) befindet, und das Licht, das durch das zweite optische Element (13) mit demselben gekoppelt wird, zu dem menschlichen Auge auszukoppeln, und das Licht, das mit dem zweiten optischen Element (13) gekoppelt wird, sich weiterhin viele Male zwischen dem zweiten optischen Element (13) und dem dritten optischen Element (14) in der ersten Richtung oder der zweiten Richtung ausbreitet,
**dadurch gekennzeichnet, dass**
das zweite optische Element (13) benachbart zu einer zweiten Oberfläche des Wellenleitersubstrats (11) ist, das zweite optische Element (13) dazu konfiguriert ist, das Licht, das durch das Wellenleitersubstrat (11) mit demselben gekoppelt wird, mit dem dritten optischen Element (14) in einer ersten Richtung und einer zweiten Richtung zu koppeln, in einer Richtung senkrecht zu einer Ebene gesehen, wo sich das dritte optische Element (14) befindet, und die zweite Oberfläche des Wellenleitersubstrats (11) eine Oberfläche des Wellenleitersubstrats (11) ist, die dem menschlichen Auge zugewandt ist, das dritte optische Element (14) benachbart zu der ersten Oberfläche des Wellenleitersubstrats (11) angeordnet ist.

**2.** Die Wellenleiteranzeigevorrichtung (1) gemäß Anspruch 1, bei der das zweite optische Element (13) dazu konfiguriert ist, das Licht, das durch das Wellenleitersubstrat (11) mit demselben gekoppelt wird, mit dem dritten optischen Element (14) in der ersten Richtung durch Totalreflexion zu koppeln, und das Licht, das durch das Wellenleitersubstrat (11) mit demselben gekoppelt wird, zu dem dritten optischen Element (14) in der zweiten Richtung durch Beugung auszukoppeln.

**3.** Die Wellenleiteranzeigevorrichtung (1) gemäß Anspruch 1 oder 2, bei der das dritte optische Element (14) dazu konfiguriert ist, das Licht, das durch das zweite optische Element (13) mit demselben gekoppelt wird, mit dem zweiten optischen Element (13) in der ersten Richtung oder der zweiten Richtung durch Totalreflexion zu koppeln, und das Licht, das durch das zweite optische Element (13) mit demselben gekoppelt wird, durch Beugung zu dem menschlichen Auge auszukoppeln.

**4.** Die Wellenleiteranzeigevorrichtung (1) gemäß einem der Ansprüche 1 bis 3, bei der das Wellenleitersubstrat (11) dazu konfiguriert ist, das Licht, das durch das erste optische Element (12) eingekoppelt wird, mit dem zweiten optischen Element (13) zu koppeln, nachdem das Licht, das durch das erste optische Element (12) eingekoppelt wird, zumindest eine Totalreflexion innerhalb des Wellenleitersubstrats (11) durchläuft.

**5.** Die Wellenleiteranzeigevorrichtung (1) gemäß einem der Ansprüche 1 bis 4, bei der das zweite optische Element (13) und das dritte optische Element (14) einander gegenüberliegen und eine Fläche des zweiten optischen Elements (13) und eine Fläche des dritten optischen Elements (14) gleich sind.

**6.** Die Wellenleiteranzeigevorrichtung (1) gemäß einem der Ansprüche 1 bis 5, bei der das dritte optische Element (14) dazu konfiguriert ist, das Licht, das durch das zweite optische Element (13) mit demselben gekoppelt wird, zu dem menschlichen Auge in der Richtung senkrecht zu der Ebene auszukoppeln, wo sich das dritte optische Element (14) befindet.

7. Die Wellenleiteranzeigevorrichtung (1) gemäß einem der Ansprüche 1 bis 6, bei der die erste Richtung senkrecht zu der zweiten Richtung ist.

8. Die Wellenleiteranzeigevorrichtung (1) gemäß einem der Ansprüche 1 bis 7, bei der das zweite optische Element (13) und das dritte optische Element (14) parallel zueinander sind.

9. Die Wellenleiteranzeigevorrichtung (1) gemäß einem der Ansprüche 1 bis 8, bei der das erste optische Element (12) zumindest einen Teil der ersten Oberfläche des Wellenleitersubstrats (11) bedeckt.

10. Die Wellenleiteranzeigevorrichtung (1) gemäß einem der Ansprüche 1 bis 9, bei der das zweite optische Element (13) zumindest einen Teil der zweiten Oberfläche des Wellenleitersubstrats (11) bedeckt, das dritte optische Element (14) zumindest einen Teil der ersten Oberfläche des Wellenleitersubstrats (11) bedeckt und das zweite optische Element (13) dem dritten optischen Element (14) gegenüberliegt.

11. Die Wellenleiteranzeigevorrichtung (1) gemäß einem der Ansprüche 1 bis 10, bei der das erste optische Element (12) ein eindimensionales Gitter ist und das zweite optische Element (13) und das dritte optische Element (14) zweidimensionale Gitter sind.

12. Die Wellenleiteranzeigevorrichtung (1) gemäß einem der Ansprüche 1 bis 11, bei der das erste optische Element (12) und das dritte optische Element (14) auf der ersten Oberfläche des Wellenleitersubstrats (11) und voneinander beabstandet sind und das zweite optische Element (13) auf der zweiten Oberfläche des Wellenleitersubstrats (11) und dem dritten optischen Element (14) gegenüberliegt.

13. Eine Erweiterte-Realität(AR)-Anzeigevorrichtung, die folgende Merkmale aufweist:

eine Wellenleiteranzeigevorrichtung (1) gemäß einem der Ansprüche 1 bis 12; und eine optische Maschine, die dazu konfiguriert ist, Licht zu dem ersten optischen Element (12) zu emittieren.

14. Die Erweiterte-Realität-Anzeigevorrichtung gemäß Anspruch 13, wobei die Erweiterte-Realität-Anzeigevorrichtung eine von einer AR-Brille, einer am Kopf befestigten AR-Anzeigevorrichtung und einer Blickfeld-Anzeigevorrichtung aufweist.

**Revendications**

1. Dispositif d'affichage à guide d'ondes (1), comprenant un substrat de guide d'ondes (11) et un premier élément optique (12), un deuxième élément optique (13) et un troisième élément optique (14) couplés au substrat de guide d'ondes (11), dans lequel

le premier élément optique (12) est situé sur un premier côté du substrat de guide d'ondes (11), le premier élément optique (12) est adjacent à une première surface du substrat de guide d'ondes (11) et configuré pour coupler une lumière incidente dans le substrat de guide d'ondes (11), et la première surface du substrat de guide d'ondes (11) est une surface du substrat de guide d'ondes (11) orientée dans une direction s'éloignant d'un oeil humain;
le substrat de guide d'ondes (11) est configuré pour coupler la lumière couplée vers l'intérieur par le premier élément optique (12) au deuxième élément optique (13);
le deuxième élément optique (13) et le troisième élément optique (14) sont situés sur un deuxième côté du substrat de guide d'ondes (11); et le troisième élément optique (14) est configuré pour coupler la lumière couplée à ce dernier par le deuxième élément optique (13) au deuxième élément optique (13) dans la première direction ou dans la deuxième direction, lorsque vu dans la direction perpendiculaire au plan dans lequel se situe le troisième élément optique (14), et pour coupler la lumière couplée à ce dernier par le deuxième élément optique (13) vers l'extérieur vers l'oeil humain, et la lumière couplée au deuxième élément optique (13) continue à se propager plusieurs fois entre le deuxième élément optique (13) et le troisième élément optique (14) dans la première direction ou dans la deuxième direction,
**caractérisé par le fait que**
le deuxième élément optique (13) est adjacent à une deuxième surface du substrat de guide d'ondes (11), le deuxième élément optique (13) est configuré pour coupler la lumière couplée à ce dernier par le substrat de guide d'ondes (11) au troisième élément optique (14) dans une première direction et dans une deuxième direction, lorsque vu dans une direction perpendiculaire à un plan dans lequel se situe le troisième élément optique (14), et la deuxième surface du substrat de guide d'ondes (11) est une surface du substrat de guide d'ondes (11) faisant face à l'oeil humain,
le troisième élément optique (14) est disposé adjacent à la première surface du substrat de guide d'ondes (11).

2. Dispositif d'affichage à guide d'ondes (1) selon la revendication 1, dans lequel le deuxième élément optique (13) est configuré pour coupler la lumière couplée à ce dernier par le substrat de guide d'ondes (11) au troisième élément optique (14) dans la première direction par réflexion totale, et pour coupler la lumière couplée à ce dernier par le substrat de guide d'ondes (11) vers l'extérieur vers le troisième élément optique (14) dans la deuxième direction par diffraction.

**3.** Dispositif d'affichage à guide d'ondes (1) selon la revendication 1 ou 2, dans lequel le troisième élément optique (14) est configuré pour coupler la lumière couplée à ce dernier par le deuxième élément optique (13) au deuxième élément optique (13) dans la première direction ou dans la deuxième direction par réflexion totale, et pour coupler la lumière couplée à ce dernier par le deuxième élément optique (13) vers l'extérieur vers l'oeil humain par diffraction.

**4.** Dispositif d'affichage à guide d'ondes (1) selon l'une quelconque des revendications 1 à 3, dans lequel le substrat de guide d'ondes (11) est configuré pour coupler la lumière couplée vers l'intérieur par le premier élément optique (12) au deuxième élément optique (13) après que la lumière couplée vers l'intérieur par le premier élément optique (12) passe par au moins une réflexion totale à l'intérieur du substrat de guide d'ondes (11).

**5.** Dispositif d'affichage à guide d'ondes (1) selon l'une quelconque des revendications 1 à 4, dans lequel le deuxième élément optique (13) et le troisième élément optique (14) sont opposés l'un à l'autre, et une zone du deuxième élément optique (13) et une zone du troisième élément optique (14) sont égales.

**6.** Dispositif d'affichage à guide d'ondes (1) selon l'une quelconque des revendications 1 à 5, dans lequel le troisième élément optique (14) est configuré pour coupler la lumière couplée à ce dernier par le deuxième élément optique (13) vers l'extérieur vers l'oeil humain dans la direction perpendiculaire au plan dans lequel se situe le troisième élément optique (14).

**7.** Dispositif d'affichage à guide d'ondes (1) selon l'une quelconque des revendications 1 à 6, dans lequel la première direction est perpendiculaire à la deuxième direction.

**8.** Dispositif d'affichage à guide d'ondes (1) selon l'une quelconque des revendications 1 à 7, dans lequel le deuxième élément optique (13) et le troisième élément optique (14) sont parallèles l'un à l'autre.

**9.** Dispositif d'affichage à guide d'ondes (1) selon l'une quelconque des revendications 1 à 8, dans lequel le premier élément optique (12) recouvre au moins une partie de la première surface du substrat de guide d'ondes (11).

**10.** Dispositif d'affichage à guide d'ondes (1) selon l'une quelconque des revendications 1 à 9, dans lequel le deuxième élément optique (13) recouvre au moins une partie de la deuxième surface du substrat de guide d'ondes (11), le troisième élément optique (14) recouvre au moins une partie de la première surface du substrat de guide d'ondes (11), et le deuxième élément optique (13) est opposé au troisième élément optique (14).

**11.** Dispositif d'affichage à guide d'ondes (1) selon l'une quelconque des revendications 1 à 10, dans lequel le premier élément optique (12) est une grille unidimensionnelle, et le deuxième élément optique (13) et le troisième élément optique (14) sont des grilles bidimensionnelles.

**12.** Dispositif d'affichage à guide d'ondes (1) selon l'une quelconque des revendications 1 à 11, dans lequel le premier élément optique (12) et le troisième élément optique (14) se situent sur la première surface du substrat de guide d'ondes (11) et distants l'un de l'autre, et le deuxième élément optique (13) se situe sur la deuxième surface du substrat de guide d'ondes (11) et opposé au troisième élément optique (14).

**13.** Appareil d'affichage de réalité augmentée, comprenant:

un dispositif d'affichage à guide d'ondes (1) selon l'une quelconque des revendications 1 à 12; et
une machine optique configurée pour émettre une lumière vers le premier élément optique (12).

**14.** Appareil d'affichage de réalité augmentée selon la revendication 13, dans lequel l'appareil d'affichage de réalité augmentée comprend l'un parmi des lunettes de RA, un appareil d'affichage de RA monté sur la tête et un appareil d'affichage à tête vers le haut.

Fig. 1

Fig. 2

Fig. 3

Fig. 4

Fig. 5

Fig. 6

Fig. 7

Fig. 8

Fig. 9

Fig. 10

**EP 4 174 558 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019187474 A1
- US 2016231478 A1
- US 10677967 B1